# EUROPÄISCHE PATENTSCHRIFT

(11) **EP 0 545 358 B1**
(45) Veröffentlichungstag und Bekanntmachung des Hinweises auf die Patenterteilung: **12.04.1995**
(21) Anmeldenummer: 92120485.5
(22) Anmeldetag: 01.12.1992
(51) Int. Cl.: F16D 65/56, F16D 65/16

(54) **Betätigungsvorrichtung mit selbsttätiger Nachstellung für Bremsen, insbesondere von Lastkraftwagen und Omnibussen**
Actuating mechanism with an automatic adjustment for brakes, especially in trucks and omnibuses
Mécanisme d'actionnement à réajustage automatique pour freins, en particulier de camions et d'autobus

(30) Priorität: 06.12.1991 DE 9115195 U
(43) Veröffentlichungstag der Anmeldung: 09.06.1993
(73) Patentinhaber: LUCAS INDUSTRIES PUBLIC LIMITED COMPANY, Solihull, West Midlands B91 3TX (GB)
(72) Erfinder: Giering, Wilfried, W-5442 Mendig (DE)
(74) Vertreter: Goetz, Rupert, Dipl.-Ing.

(56) Entgegenhaltungen:
- EP-A- 0 008 452
- EP-A- 0 271 864
- DE-A- 3 631 035
- DE-U- 9 115 195

## Beschreibung

Die Erfindung betrifft eine Betätigungsvorrichtung mit selbsttätiger Nachstellung für Bremsen nach dem Oberbegriff des Anspruchs 1.

Eine gattungsgemäße Betätigungsvorrichtung ist aus der EP 0 271 864 A2 bekannt. Bei der dort offenbarten Betätigungsvorrichtung überträgt eine Kupplungsanordnung zum axialen Nachstellen eines Bremsbackens ein begrenztes Drehmoment von einem Drehkörper auf einen ersten Schraubkörper. Die Kupplungsanordnung ist konzentrisch um den ersten Schraubkörper herum angeordnet, woraus eine relativ große Radialabmessung einer Bremse resultiert, die mit einer solchen Betätigungsvorrichtung ausgerüstet ist. Der bei dieser Anordnung erforderliche Platzbedarf in radialer Richtung führt dazu, daß Bremsen mit gattungsgemäßen Betätigungsvorrichtungen insbesondere in Fahrzeuge, die Allradantrieb aufweisen, mangels ausreichender Platzverhältnisse nicht eingebaut werden können.

Der Erfindung liegt daher die Aufgabe zugrunde, eine gattungsgemäße Betätigungsvorrichtung mit selbsttätiger Nachstellung für Bremsen so fortzubilden, daß ihr Platzbedarf in radialer Richtung vermindert ist.

Erfindungsgemäß ist diese Aufgabe durch eine Betätigungsvorrichtung gelöst, die die Merkmale des Anspruchs 1 aufweist. Vorteilhaft weisen dabei die Rückstellwelle und das Ritzel Formteile auf, die in formschlüssigen gegenseitigen Eingriff bringbar sind. Die Rückstellwelle läßt sich bei Bedarf, etwa beim Auswechseln von Bremsbacken, dann einfach mit dem Ritzel zum Zurückschrauben der beiden Schraubkörper in Bezug aufeinander koppeln.

Bei einer Weiterbildung der Erfindung ist die Rückstellwelle federnd nachgiebig außer Eingriff mit dem Ritzel vorgespannt. Diese Ausführungsform erfordert ein bewußtes Einrücken der Rückstellwelle zum Zurückschrauben der beiden Schraubkörper, so daß eine unbeabsichtigte Vergrößerung des Bremslüftspiels beispielsweise durch einen unaufmerksamen Monteur weitgehend vermieden ist.

Vorzugsweise weist die Freilauf-Rutschkupplung ein erstes und ein zweites Kupplungsteil auf, von denen das zweite Kupplungsteil am Ritzel ausgebildet und mit dem ersten Kupplungsteil durch eine erste Feder verbunden ist, die durchrutscht, wenn das erste Kupplungsteil entgegen der Nachstellrichtung gedreht wird. Damit ist gewährleistet, daß eine zu einer Vergrößerung des Bremslüftspiels führende Drehung des ersten Kupplungsteils nicht auf den ersten Schraubkörper übertragen wird. Bei dieser Ausführungsform tritt der Reibschluß direkt zwischen einer Anlagefläche des in Axialrichtung federnd vorgespannten Ritzels und einer gegenüberliegenden, im Gehäuse ausgebildeten Anlagefläche auf.

Bei einer abgewandelten Ausführungsform ist am Ritzel ein drittes Kupplungsteil ausgebildet, das dem zweiten Kupplungsteil gegenüberliegt und durch eine zweite Feder mit einem vierten Kupplungsteil verbunden ist, so daß das dritte und vierte Kupplungsteil und die zweite Feder eine weitere Freilauf-Rutschkupplung bilden. Die auf das Ritzel in Axialrichtung wirkende Vorspannkraft wird dabei auf das vierte Kupplungsteil übertragen, wodurch dieses in reibschlüssigem Kontakt mit dem Gehäuse gegen Verdrehen gehalten ist. Um eine Nachstellung des Bremslüftspiels zu ermöglichen, rutscht die zweite Feder beim Drehen des dritten Kupplungsteils in Nachstellrichtung durch.

Bevorzugt ist bei dieser Ausführungsform der reibschlüssige Kontakt mit dem Gehäuse über eine Kegelkupplung mit Konus, die das vierte Kupplungsteil einschließt, und einen Gegenkonus im Gehäuse ausgeführt. Durch Lösen der Kegelkupplung ist eine Drehbewegung des Ritzels entgegen der Nachstellrichtung erleichtert, wie sie beispielsweise beim Bremsbackenwechsel vorgenommen werden muß.

Es ist dabei vorteilhaft, wenn das dem Gehäuse zugewandte Ende der Rückstellwelle sich konisch verjüngt, so daß beim Ineingriffbringen der Formteile der Rückstellwelle und des Ritzels Kugeln, die zwischen der Kegelkupplung und dem Gehäuse angeordnet sind, in radialer Richtung auseinandergedrängt werden und den Konus vom Gegenkonus abheben.

Erfindungsgemäß ist der Platzbedarf, den die Betätigungsvorrichtung einschließlich der Nachstellung in radialer Richtung benötigt, u. a. dadurch vermindert worden, daß die Kupplungsanordnung um die Rückstellwelle herum angeordnet ist. Diese Lage der Kupplungsanordnung gestattet es auch, die von den ersten und zweiten Nockenflächen gebildete Kugel-Rampenanordnung mit geringerem Durchmesser und damit ebenfalls platzsparender auszuführen, so daß eine mit der erfindungsgemäßen Betätigungsvorrichtung ausgerüstete Bremse auch in Fahrzeuge eingebaut werden kann, in denen dies bisher mangels ausreichendem Bauraum nicht möglich war.

Zwei Ausführungsbeispiele der Erfindung werden im folgenden anhand schematischer Zeichnungen näher erläutert. Es zeigt:
- Fig. 1: eine Draufsicht einer Schwimmsattel-Teilbelag-Scheibenbremse,
- Fig. 2: eine Seitenansicht der Bremse aus Fig. 1,
- Fig. 3: eine teilweise aufgebrochene Draufsicht einer ersten Ausführungsform der in Fig. 1 allgemein gezeigten Bremse,
- Fig. 4: eine vergrößerte Darstellung der Betätigungsvorrichtung und Nachstellung gemäß Fig. 3,
- Fig. 5: eine gegenüber Fig. 4 nochmals vergrößerte Darstellung der Nachstellung,
- Fig. 6: den Schnitt A-A aus Fig. 5,
- Fig. 7: den Schnitt B-B aus Fig. 5,
- Fig. 7a und 7b: die Draufsicht auf in der Kupplungsanordnung verwendete Lamellen,
- Fig. 8: eine der Fig. 5 entsprechende Ansicht einer zweiten Ausführungsform, und
- Fig. 9: eine gegenüber Fig. 8 vergrößerte Darstellung der Nachstellung gemäß der zweiten Ausführungsform.

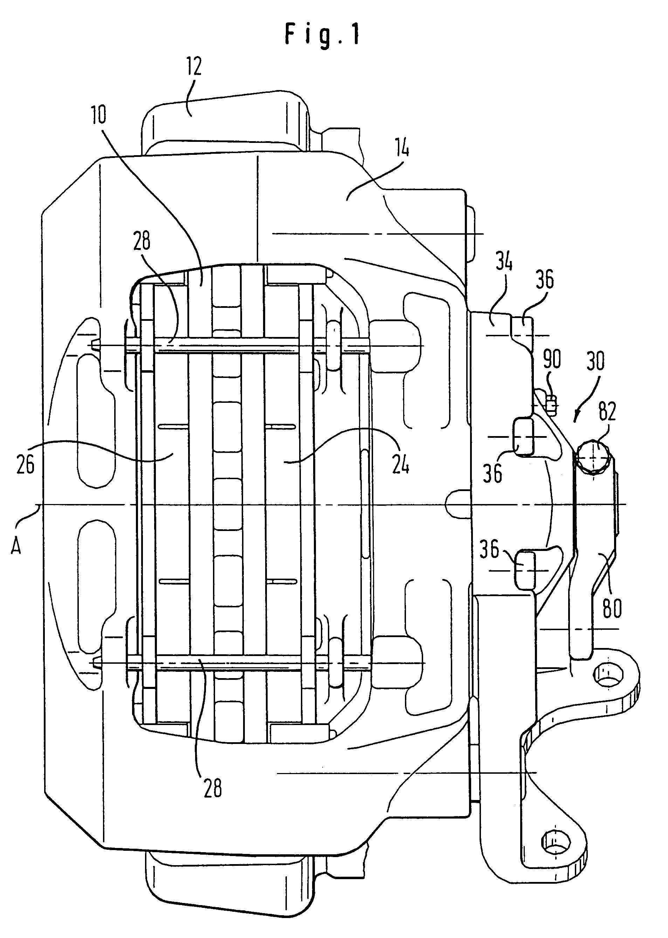

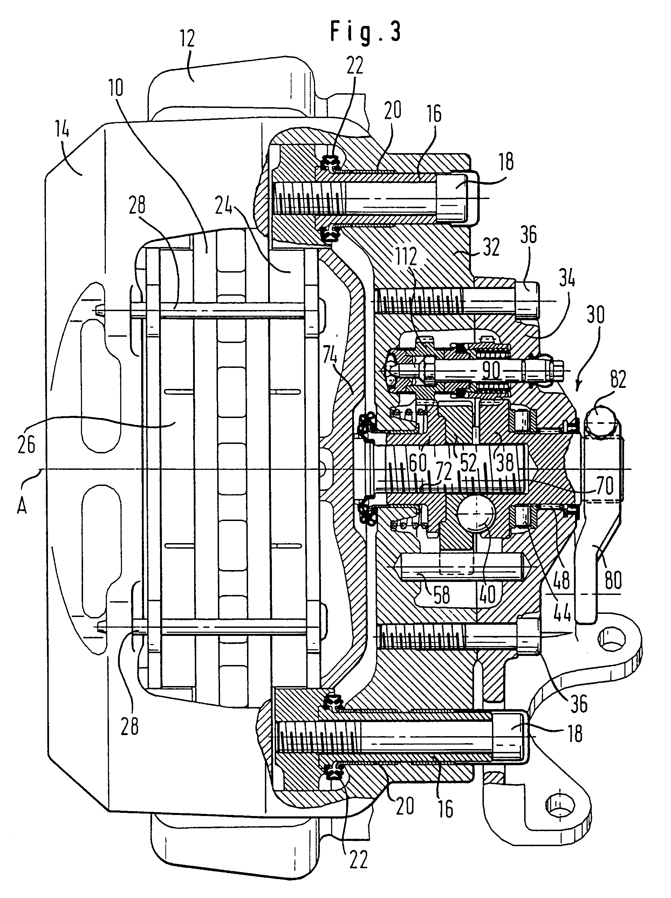

Die in den Fig. 1 bis 3 dargestellte Scheibenbremse ist einer, hier innenbelüfteten, Bremsscheibe 10 zugeordnet und hat einen Bremsträger 12, an dem ein einstückiger Schwimmsattel 14 parallel zur Achse der Bremsscheibe verschiebbar geführt ist. Aus Fig. 3 ist ersichtlich, daß als Führungen zwei Büchsen 16 dienen, die mit je einer Innensechskantschraube 18 am Bremsträger 12 befestigt sind. Damit der Schwimmsattel 14 besser auf den Büchsen 16 gleiten kann, sind in den entsprechenden Durchgangsausnehmungen des Schwimmsattels Lagerbuchsen 20 angeordnet. Faltenbälge 22 schützen die Gleitführungen vor dem Eindringen von Schmutz.

Der Schwimmsattel 14 umgreift zwei Bremsbacken 24 und 26, die an je einer Seite der Bremsscheibe 10 angeordnet sind. Als Bremsbacke wird hier die Einheit aus Reibbelag und Tragplatte bezeichnet. Zum Auswechseln lassen sich die Bremsbacken 24 und 26 nach oben durch eine im Schwimmsattel ausgebildete Öffnung herausziehen, nachdem sie sichernde Haltestifte 28 gelöst worden sind.

Zum Andrücken des inneren Bremsbackens 24 an die Bremsscheibe 10 ist eine Betätigungsvorrichtung 30 vorgesehen. Beim Andrücken des inneren Bremsbackens 24 an die Bremsscheibe 10 entstehen Reaktionskräfte, die den Schwimmsattel 14 verschieben und den an ihm abgestützen äußeren Bremsbacken 26 ebenfalls gegen die Bremsscheibe 10 drücken.

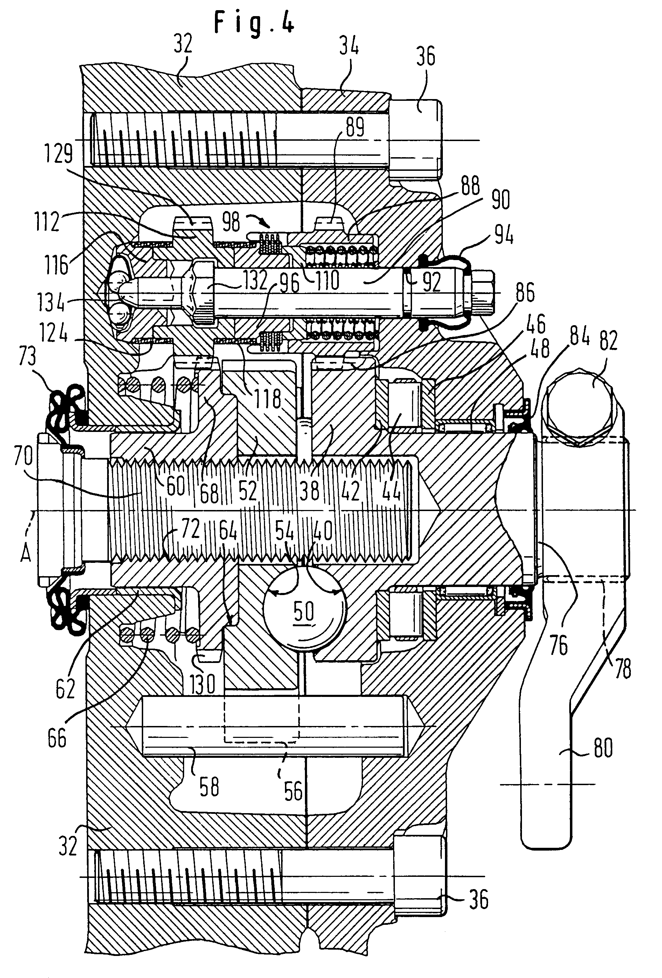

Die Betätigungsvorrichtung 30 hat ein Gehäuse 32, das im dargestellten Beispiel als Bestandteil des Schwimmsattels 14 ausgebildet ist und eine zur Bremsscheibe 10 normale, also zu deren Drehachse parallele Gehäuseachse A aufweist. Ein Gehäusedeckel 34 ist mit Schrauben 36 am Gehäuse 32 befestigt. Beim Betätigen der Bremse werden die entstehenden Reaktionskräfte über den Gehäusedeckel 34 an das Gehäuse 32 bzw. den Schwimmsattel 14 weitergeleitet. Der Gehäusedeckel 34 umschließt einen glockenförmigen Drehkörper 38, an dessen der Bremsscheibe 10 zugewandten Stirnseite drei Nockenflächen 40 mit gleichem Umfangsabstand voneinander um die Gehäuseachse A angeordnet sind. Wie genauer aus Fig. 4 zu ersehen ist, stützt sich der Drehkörper 38 in Axialrichtung über eine Wellenscheibe 42, ein Axialzylinderrollenlager 44 und eine Gehäusescheibe 46, und in Radialrichtung über ein Nadellager 48 an dem Gehäusedeckel 34 ab.

An den am Drehkörper 38 ausgebildeten Nockenflächen 40 stützt sich über drei Kugeln 50 ein ringförmiger Übertragungskörper 52 ab, an dessen den Nockenflächen 40 zugewandten Stirnseite ebenfalls drei Nockenflächen 54 ausgebildet sind. Der Übertragungskörper 52 weist einen radialen Fortsatz auf, dessen Ende 56 gabelförmig ausgeführt ist und einen Verdrehsicherungsstift 58 umgreift, so daß der Übertragungskörper 52 in Axialrichtung verschoben werden kann, gegen Verdrehen jedoch gesichert ist. Der Verdrehsicherungsstift 58 ist mit einem Ende im Gehäuse 32 und mit dem anderen Ende im Gehäusedeckel 34 gelagert. Der Drehkörper 38, die Kugeln 50 und der Übertragungskörper 52 bilden zusammen eine Kugel-Rampenanordnung.

Auf der den Nockenflächen 54 gegenüberliegenden Stirnseite des Übertragungskörpers 52 stützt sich ein gleichachsig mit ihm angeordneter, hülsenförmiger ersten Schraubkörper 60 in axialer Richtung ab. Der Schraubkörper 60 ist um die Gehäuseachse A drehbar in einer Gleitbuchse 62 gelagert, die in eine Durchgangsausnehmung des Gehäuses 32 eingelassen ist. Auf der von der Bremsscheibe 10 abgewandten Stirnseite des Schraubkörpers 60 ist ein ringförmiger Bund 64 ausgebildet, der den Übertragungskörper 52 in bezug auf die Gehäuseachse A zentriert.

Durch eine Druckfeder 66, die konzentrisch zum Schraubkörper 60 angeordnet ist und sich auf einer Seite am Gehäuse 32 und auf der gegenüberliegenden Seite an einem Flansch 68 des Schraubkörpers 60 abstützt, werden der Schraubkörper 60, die Kugel-Rampenanordnung und deren Axiallagerung in axialer Richtung spielfrei gehalten.

In den hülsenförmigen ersten Schraubkörper 60 ist ein pilzförmiger zweiter Schraubkörper 70 eingeschraubt; diese Schraubverbindung dient zum axialen Nachstellen der Bremsbacken 24, 26 und wird deshalb als Nachstellgewindepaarung 72 bezeichnet. Ein Faltenbalg 73 schützt die Durchgangsausnehmung, in der der erste Schraubkörper 60 drehbar gelagert ist, vor dem Eindringen von Schmutz. Wie aus Fig. 3 hervorgeht, ist zwischen dem zweiten Schraubkörper 70 und dem Bremsbacken 24 zur gleichmäßigeren Einleitung von Bremsbetätigungskräften eine Druckverteilerplatte 74 angeordnet, die gegenüber dem Bremsträger 12 axial verschiebbar, jedoch durch Führungen des Bremsträgers gegen Drehen festgehalten ist. Der Schraubkörper 70 ist durch die Druckverteilerplatte 74 gegen Verdrehen gehalten (nicht gezeigt).

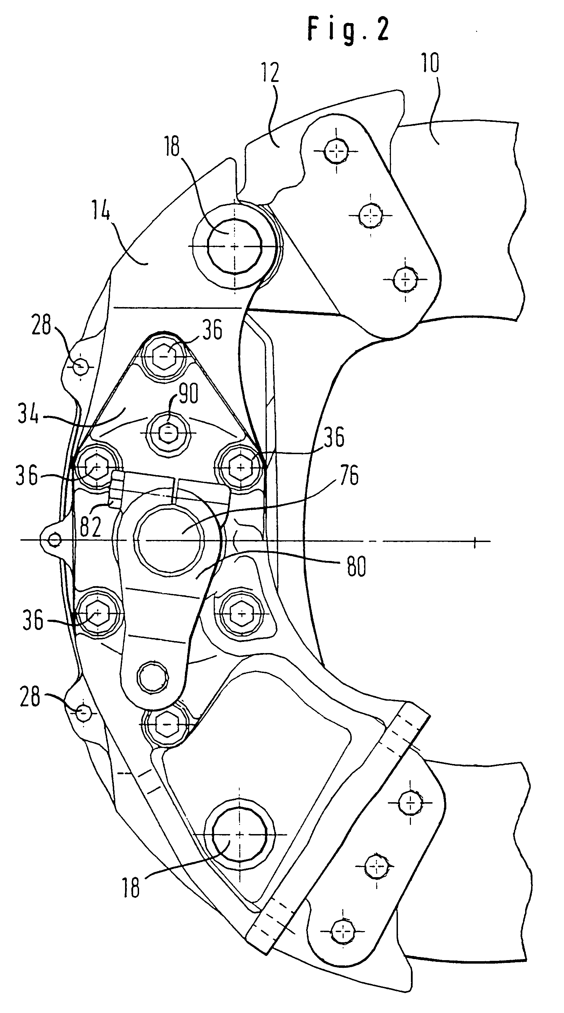

Zum Betätigen der Bremse ist an der der Bremsscheibe 10 abgewandten Stirnseite des Drehkörpers 38 ein Wellenfortsatz 76 ausgebildet, der eine Außenverzahnung 78 aufweist, auf die ein mit einer komplementären Innenverzahnung versehener Betätigungshebel 80 mit geschlitztem Ende gesteckt ist. Das geschlitzte Ende des Betätigungshebels 80 ist auf dem Wellenfortsatz 76 bzw. dessen Verzahnung 78 durch eine Klemmschraube 82 verspannt (sh. auch Fig. 2). Ein Lippendichtring 84 dichtet den Drehkörper 38 mit seinem Wellenfortsatz 76 gegen den Gehäusedeckel 34 ab.

Zur Betätigung der Bremse wird der Betätigungshebel 80 um die Gehäuseachse A verschwenkt, beispielsweise über pneumatisch angesteuerte Membranzylinder (hier nicht gezeigt). Die Drehbewegung wird auf den einstückig mit dem Wellenfortsatz 76 verbundenen Drehkörper 38 übertragen, so daß die Kugeln 50 auf den Nockenflächen 40 und 54 hochlaufen und den Übertragungskörper 52 in axialer Richtung vom Drehkörper 38 in Fig. 4 nach links wegdrücken. Die Verschiebung in Axialrichtung wird auf den ersten Schraubkörper 60 und von diesem auf den zweiten Schraubkörper 70 übertragen, so daß die mit letzterem verbundene Druckverteilerplatte 74 den inneren Bremsbacken 24 an die Bremsscheibe 10 anlegt. Die entstehenden Reaktionskräfte führen, wie beschrieben, zu einer Verschiebung des Schwimmsattels 14, so daß auch der äußere Bremsbacken 26 gegen die Bremsscheibe 10 gedrückt wird.

Zum Lösen der Bremse wird der Betätigungshebel 80 in seine Ausgangslage zurückgeschwenkt, die Kugeln 50 laufen auf den Nockenflächen 40 und 54 wieder herunter und die Druckfeder 66 verschiebt den ersten 60 und den mit ihm verbundenen zweiten Schraubkörper 70 sowie den Übertragungskörper 52 in axialer Richtung in Fig. 4 nach rechts, wodurch die beiden Bremsbacken 24, 26 von der Bremsscheibe 10 freigemacht werden.

Im folgenden wird die Funktion der Nachstellung näher erläutert. Der Drehkörper 38 weist eine im dargestellten Beispiel als äußere Geradverzahnung 86 ausgebildete Verzahnung auf, die mit einer entsprechenden Verzahnung 89 des Hülsenrads 88 kämmt, welches in einem Abstand parallel zur Gehäuseachse A im Gehäusedeckel 34 drehbar gelagert ist. Gleichachsig zum Hülsenrad 88 ist eine Rückstellwelle 90 angeordnet, die im Gehäusedeckel 34 ebenfalls drehbar gelagert ist und sich durch den Gehäusedeckel und das Hülsenrad erstreckt. Ein Dichtring 92 und eine elastische Manschette 94 dichten das in Fig. 4 rechte Ende der Rückstellwelle 90 gegen einen Austritt von Schmiermittel bzw. einen Eintritt von Schmutz ab.

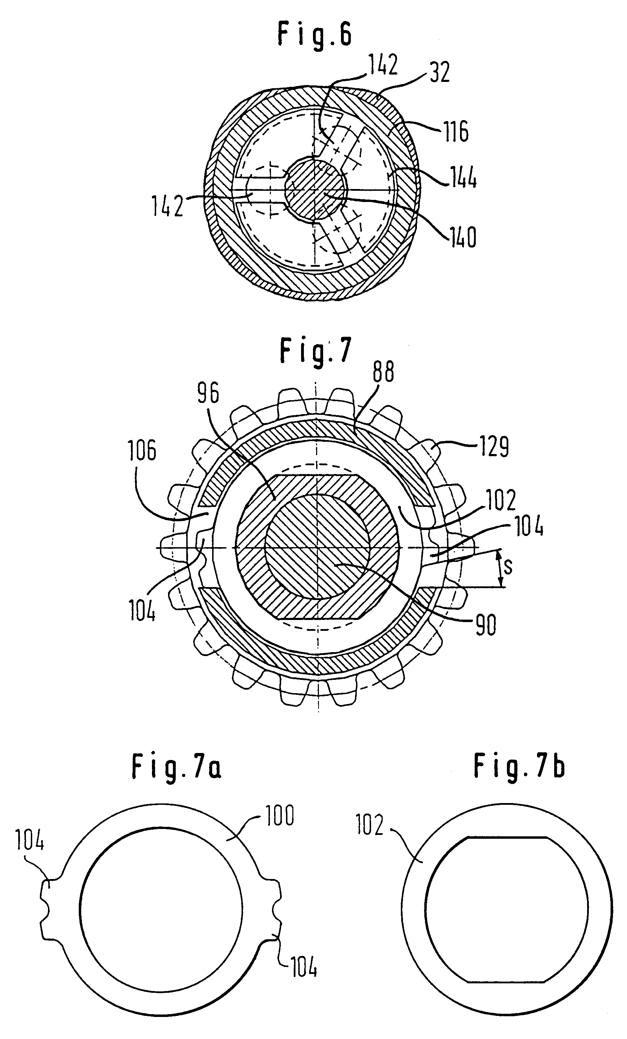

Das Hülsenrad 88 ist mit einer Kupplungshülse 96, die auf der Rückstellwelle 90 drehbar gelagert ist, durch eine Kupplungsanordnung 98 verbunden. Die Kupplungsanordnung 98 weist ein Lamellenpaket 100, 102 auf, das aus Lamellen 100 (Fig. 7a) besteht, die axial verschiebbar und zu gemeinsamer Drehung mit dem Hülsenrad 88 verbunden sind, und aus Lamellen 102 (Fig. 7b), die axial verschiebbar und zu gemeinsamer Drehung mit der Kupplungshülse 96 verbunden sind. Die Lamellen 100 haben je zwei Zungen 104, die mit einem Spiel S in achsparallele Nuten 106 des Hülsenrads 88 eingreifen (sh. auch Fig. 7). Das Spiel S bestimmt das Bremslüftspiel.

Das Lamellenpaket 100, 102 ist durch eine Axialdruckfeder 108, die sich am Gehäusedeckel 34 abstützt und ihre Kraft über eine Druckhülse 110, die drehbar auf der Rückstellwelle 90 gelagert und zwischen dem Hülsenrad 88 und der Kupplungshülse 96 angeordnet ist, auf das Lamellenpaket überträgt, derart gespannt gehalten, daß eine Drehung des Hülsenrads 88 reibschlüssig auf die Kupplungshülse 96 übertragen wird, solange dabei ein bestimmtes Drehmoment nicht überschritten wird.

An die Kupplungshülse 96 schließt sich in axialer Richtung ein außenverzahntes Ritzel 112 an, das zum einen auf der Rückstellwelle 90 und zum anderen an einem ringförmigen Bund 114 einer Kegelkupplung 116 drehbar gelagert ist, die sich im Gehäuse 32 abstützt. Das Ritzel 112 ist mit der Kupplungshülse 96 durch eine Schlingfeder 118 verbunden, die Kupplungsabschnitte 120, 122 des Ritzels 112 bzw. der Kupplungshülse 96 in radialer Richtung spielfrei umschließt. Die wendelförmige Schlingfeder 118 ist dabei so gewickelt, daß sie eine Drehung der Kupplungshülse 96 in einer Betätigungsdrehrichtung auf das Ritzel 112 überträgt, jedoch eine Rückdrehung der Kupplungshülse 96 ohne das Ritzel 112 ermöglicht, d.h. in Betätigungsdrehrichtung zieht sich die Schlingfeder 118 zu und nimmt das Ritzel 112 mit, während sie sich beim Rückdrehen der Kupplungshülse 96 öffnet. Die Schlingfeder 118 und die beiden Kupplungsabschnitte 120, 122 bilden zusammen eine Freilauf-Rutschkupplung.

Auf die gleiche Weise ist das Ritzel 112 über einen auf der der Bremsscheibe 10 zugewandten Seite ausgebildeten Kupplungsabschnitt 123 durch eine weitere Schlingfeder 124 mit einem Kupplungsabschnitt 125 an der Kegelkupplung 116 verbunden. Die Schlingfeder 124 ist so gewickelt, daß sie bei einer Drehung des Ritzels 112 in Betätigungsdrehrichtung dieses gegenüber der Kegelkupplung 116 durchrutschen läßt, eine Rückdrehung des Ritzels 112 jedoch verhindert. Die Kegelkupplung 116 weist einen konusförmig ausgebildeten Umfangsendabschnitt 126 auf, der in einem im Gehäuse 32 entsprechend ausgebildeten Gegenkonus 128 durch die Kraft der Axialdruckfeder 108 reibschlüssig abgestützt ist.

Das Ritzel 112 steht mit seiner Verzahnung 129 in kämmendem Eingriff mit einer Außenverzahnung 130, die am ersten Schraubkörper 60 ausgebildet ist (sh. Fig. 4).

Am Ritzel 112 und an der Rückstellwelle 90 sind Formteile 131, 132 in Gestalt eines Innensechskants 131 am Ritzel 112 und eines Außensechskants 132 auf der Rückstellwelle 90 ausgebildet. Durch Verschieben der Rückstellwelle 90 in Axialrichtung auf die Bremsscheibe 10 zu kann der Außensechskant 132 mit dem Innensechskant 131 in Eingriff gebracht werden. Das Eingreifen wird durch einen Konus 134 erleichtert, welcher den Übergang von einem zylindrischen Bereich der Rückstellwelle 90 zum Außensechskant 132 darstellt. Durch eine konzentrisch zur Rückstellwelle 90 angeordnete Druckfeder 136, die sich auf einer Seite an der Druckhülse 110 und auf ihrer anderen Seite an einer Ringscheibe 138 abstützt, die in einer Umfangsnut der Rückstellwelle 90 gehalten ist, ist die Rückstellwelle 90 federnd nachgiebig so vorgespannt, daß die Formteile 131, 132 nicht in Eingriff stehen.

Beim Betätigen der Bremse wird die durch das Verschwenken des Betätigungshebels 80 hervorgerufene Drehbewegung des Drehkörpers 38 über dessen äußere Geradverzahnung 86 auf das Hülsenrad 88 übertragen. Nach Überwinden des Bremslüftspiels, das üblicherweise nur etwa 0,5 mm beträgt, haben sich die beiden Bremsbacken 24 und 26 an die Bremsscheibe 10 angelegt, die nun einer weiteren axialen Verschiebung der beiden Schraubkörper 60 und 70 eine rasch steigende Reaktionskraft entgegensetzt. Durch diese Reaktionskraft wird die Reibung in der Nachstellgewindepaarung 72 derart gesteigert, daß die Kupplungsanordnung 98 durchrutscht und eine weitere Drehung des Drehkörpers 38 nur eine zusätzliche axiale Bewegung der beiden Schraubkörper 60 und 70 zur Bremsscheibe 10 hin bewirkt.

Wird jedoch bei Betätigung der Bremse das Spiel LS überwunden, ohne daß die Bremsbacken 24 und 26 die Bremsscheibe 10 erreichen und eine entsprechend starke Reaktionskraft entstehen lassen, so ist wenigstens einer der Bremsbacken so stark abgenutzt, daß eine Nachstellung erforderlich ist. In diesem Fall wird die vom Drehkörper 38 auf das Hülsenrad 88 übertragene Drehbewegung über die Kupplungsanordnung 98 und die Schlingfeder 118 zum Ritzel 112 weitergeleitet und von diesem über die Verzahnungen 129 und 130 auf den ersten Schraubkörper 60 übertragen, wobei die Schlingfeder 124 das Ritzel 112 gegenüber der Kegelkupplung 116 durchrutschen läßt. Da der zweite Schraubkörper 70 durch die Druckverteilerplatte 74 an einer Drehung gehindert ist, wird somit der erste Schraubkörper 60 relativ zum zweiten Schraubkörper 70 gedreht, wodurch dieser aus dem ersten Schraubkörper 60 herausgeschraubt wird und die Bremse nachstellt.

Sobald der innere Bremsbacken 24 an der Bremsscheibe 10 anliegt, erhöht sich, wie zuvor beschrieben, die entstehende Reaktionskraft rasch und die Kupplungsanordnung 98 rutscht wieder durch.

Beim Lösen der Bremse wird zwar die nun entgegengesetzt verlaufende Drehbewegung des Drehkörpers 38 auf das Hülsenrad 88 übertragen, jedoch nicht mehr zum Ritzel 112 weitergeleitet, da die Schlingfeder 118 sich in dieser Drehrichtung öffnet und die Kupplungshülse 96 gegenüber dem Ritzel 112 durchrutschen läßt. Die Nachstellung, die beim Betätigen der Bremse stattgefunden hat, bleibt auch dann erhalten, wenn die Betätigungsvorrichtung oder irgendeines ihrer Bauteile im Betrieb Vibrationen, beispielsweise aufgrund von Motorschwingungen und Fahrbahnunebenheiten, ausgesetzt ist, da das Ritzel 112 über die Schlingfeder 124 und den Reibschluß der Kegelkupplung 116 an einer Drehung entgegen der Nachstellrichtung gehindert ist und somit eine Verdrehsicherung für den ersten Schraubkörper 60 darstellt.

Das von der Kupplungsanordnung 98 übertragbare Drehmoment hängt von der durch die Druckfedern 108 und 136 ausgeübten Kraft ab. Beim hier gezeigten Ausführungsbeispiel übt die Druckfeder 136 eine Kraft von etwa 1,5 kp und die Druckfeder 108 eine Kraft von etwa 14,5 kp aus. Das Lamellenpaket 100, 102 ist so eingestellt, daß die Kupplungsanordnung durchrutscht, wenn das zum Verdrehen des ersten Schraubkörpers 60 in der Nachstellgewindepaarung 72 erforderliche Drehmoment 3 Nm übersteigt.

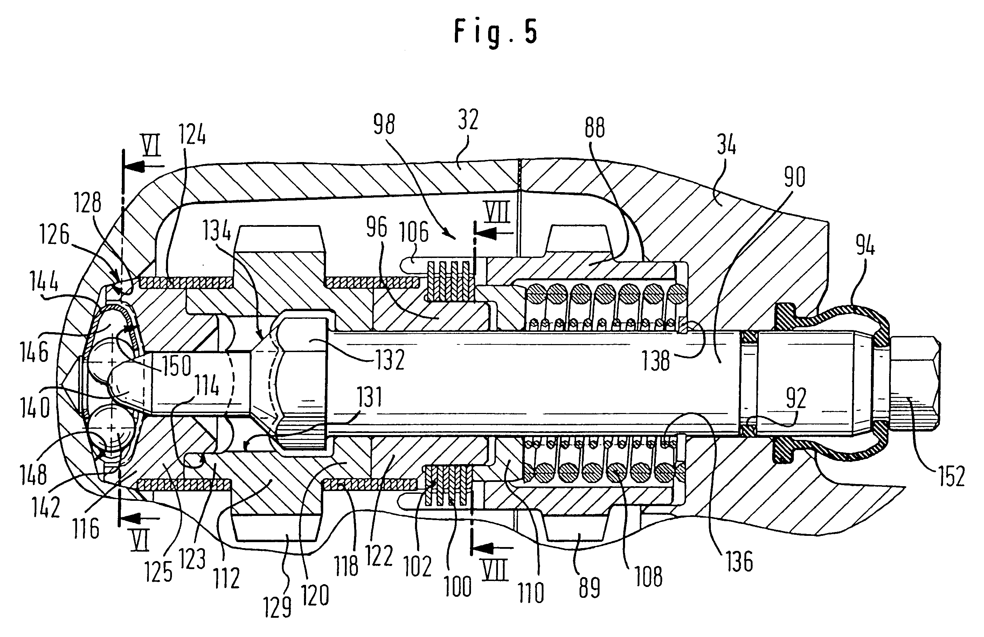

Durch den beschriebenen Nachstellvorgang wird während der Lebensdauer der Bremsbacken 24 und 26 der zweite Schraubkörper 70 schrittweise immer weiter aus dem ersten Schraubkörper 60 herausgeschraubt, bis die Bremsbacken 24, 26 ihre Verschleißgrenze erreicht haben und ausgewechselt werden müssen. Zu diesem Zweck müssen die beiden Schraubkörper 60 und 70 wieder soweit ineinandergeschraubt werden, bis sie die in den Zeichnungen abgebildete Ausgangsstellung erreicht haben. Dies geschieht, indem die Rückstellwelle 90 gegen die Kraft der Feder 136 in Axialrichtung in Fig. 5 nach oben verschoben wird, bis der auf der Rückstellwelle 90 ausgebildete Außensechskant 132 in Eingriff mit dem Innensechskant 131 des Ritzels 112 ist. Dabei drängt das der Bremsscheibe 10 zugewandte, konisch ausgeführte Ende 140 der Rückstellwelle 90, die sich durch die Kegelkupplung 116 erstreckt, drei Kugeln 142 radial nach außen, die durch einen Kugelkäfig 144 gehalten und in einem Zwischenraum 146 angeordnet sind, der durch eine im wesentlichen tellerförmige Vertiefung 148 im Gehäuse 32 und eine im wesentlichen tellerförmige Ausnehmung 150 in der gegenüberliegenden Stirnfläche der Kegelkupplung 116 begrenzt ist (sh. auch Fig. 6). Indem die Kugeln 142 vom konisch ausgeführten Ende 140 der Rückstellwelle 90 radial nach außen gedrängt werden, geraten sie in Eingriff mit den tellerförmigen Begrenzungsflächen des Zwischenraums 146 und drücken ihrerseits die Kegelkupplung 116 aus ihrem durch den konusförmigen Endabschnitt 126 und den Gegenkonus 128 gebildeten Sitz, wodurch der Reibschluß zwischen der Kegelkupplung 116 und dem Gehäuse 32 aufgehoben ist. Nunmehr kann beispielsweise mit einem am dem Ende 140 gegenüberliegenden und als Sechskant 152 ausgebildeten Ende der Rückstellwelle 90 angesetzten Schraubschlüssel ohne besonderen Kraftaufwand die zum Auswechseln der Bremsbacken erforderliche Rückstellung der beiden Schraubkörper 60 und 70 vorgenommen werden.

Nach Beendigung der Rückstellung wird die Rückstellwelle 90 von der Druckfeder 136 wieder in Fig. 5 nach unten in ihre Normalstellung verschoben, so daß die Kugeln 142 sich im Zwischenraum 146 radial nach innen bewegen, die Kegelkupplung 116 durch die Kraft der Axialdruckfeder 108 in reibschlüssigen Eingriff mit dem Gehäuse 32 gebracht wird und der Innensechskant 131 und der Außensechskant 132 außer Eingriff sind.

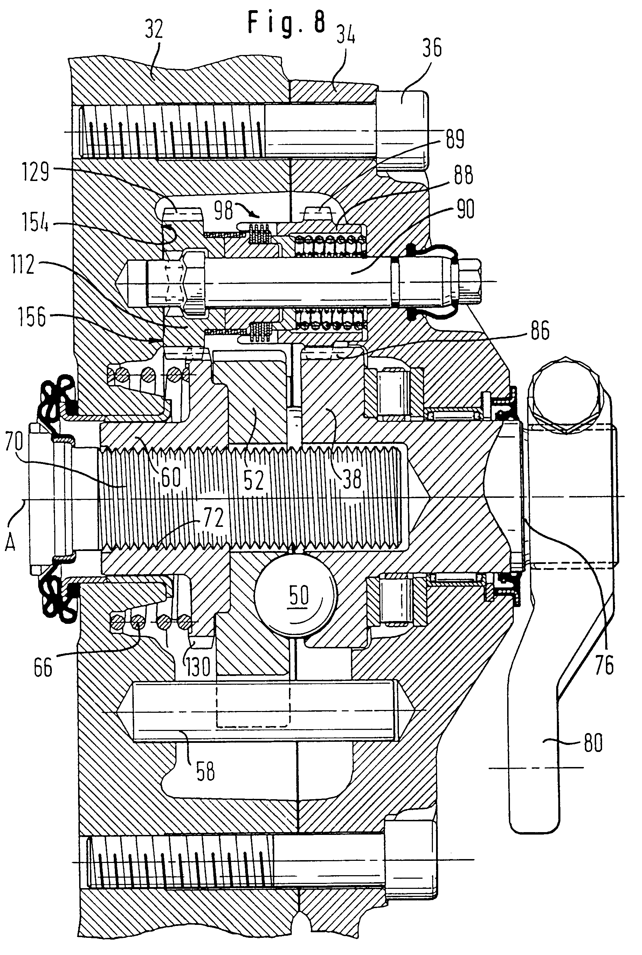

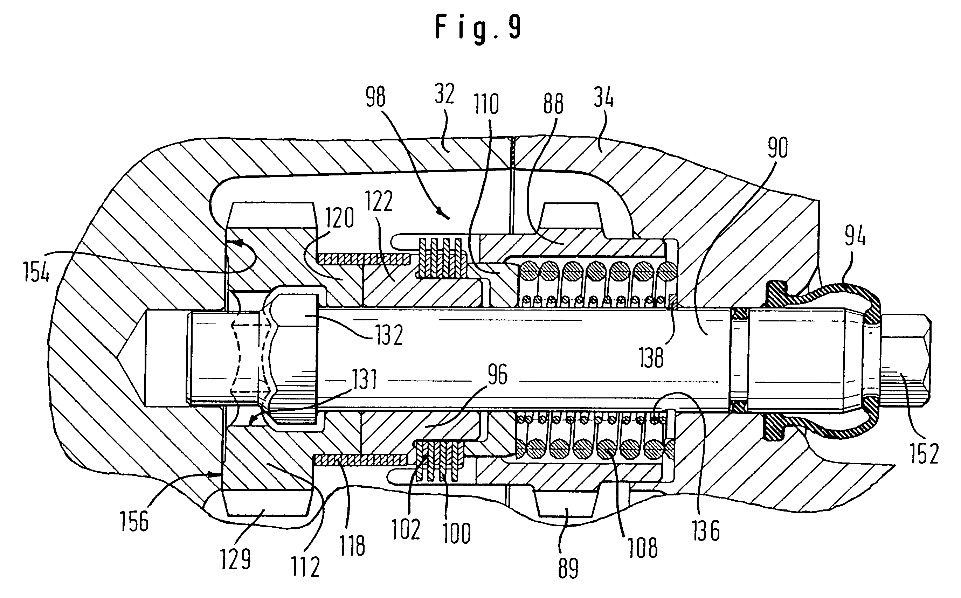

Das in den Fig. 8 und 9 gezeigte zweite Ausführungsbeispiel unterscheidet sich vom zuvor beschriebenen ersten Ausführungsbeispiel durch eine etwas einfacher gestaltete Nachstellung. Es fehlen im wesentlichen die Kegelkupplung 116, der Kupplungsabschnitt 123 und die zweite Schlingfeder 124 sowie der Zwischenraum 146 mit den darin angeordneten Kugeln 142. Stattdessen findet der als Verdrehsicherung wirkende Reibschluß direkt zwischen einer am Gehäuse 32 ausgebildeten Anlagefläche 154 und einer kreisringförmigen Anlagefläche 156 statt, die auf der gegenüberliegenden Stirnseite des Ritzels 112 ausgebildet ist. Das sowohl bei der Nachstellung als auch bei der Rückstellung zu überwindende Reibmoment ergibt sich aus dem Produkt der durch die Federn 108 und 136 erzeugten Federkraft, dem Reibwert und dem Reibradius.

## Patentansprüche

1. Betätigungsvorrichtung mit selbsttätiger Nachstellung für Bremsen, insbesondere von Lastkraftwagen und Omnibussen, mit
- einem Gehäuse (32), das eine Gehäuseachse (A) aufweist und zumindest eine um diese angeordnete erste Nockenfläche (54) umschließt,
- einem Drehkörper (38), der um die Gehäuseachse (A) drehbar ist, einen axialen Fortsatz (76) zum Ankuppeln eines Betätigungsgliedes (80) hat und zumindest eine zweite Nockenfläche (40) aufweist, mit der er sich an der ersten Nockenfläche (54) zum Hervorrufen einer von seiner Drehung abhängigen axialen Verschiebung abstützt,
- einem ersten Schraubkörper (60), der um die Gehäuseachse (A) drehbar ist,
- einem zweiten Schraubkörper (70), der gegen Drehen festgehalten, zum Ausüben einer Betätigungskraft auf einen Bremsbacken (24) ausgebildet und mit dem ersten Schraubkörper (60) durch eine Nachstellgewindepaarung (72) verbunden ist,
- einer Kupplungsanordnung (98), die ein begrenztes Drehmoment vom Drehkörper (38) auf den ersten Schraubkörper (60) zum axialen Nachstellen des Bremsbackens (24) überträgt,
- einer Rückstellwelle (90), die in seitlichem Abstand von der Gehäuseachse (A) gelagert ist, und
- einem Ritzel (112), das mit dem ersten Schraubkörper (60) gekuppelt ist, wobei die Rückstellwelle (90) über das Ritzel (112) ein Zurückschrauben der beiden Schraubkörper (60, 70) in bezug aufeinander zum Auswechseln des Bremsbackens (24) ermöglicht,
dadurch **gekennzeichnet,** daß
- der Drehkörper (38) an seinem Umfang eine Verzahnung (86) aufweist,
- die Kupplungsanordnung (98) um die Rückstellwelle (90) herum angeordnet ist und über eine Verzahnung (89) mit der Verzahnung (86) des Drehkörpers (38) in Eingriff steht, so daß das begrenzte Drehmoment vom Drehkörper (38) über die Kupplungsanordnung (98) und das Ritzel (112) auf den ersten Schraubkörper (60) übertragen wird,
- das Ritzel (112) zur Erzielung eines Reibschlusses federnd in Axialrichtung vorgespannt ist und mit der Kupplungsanordnung (98) durch eine Freilauf-Rutschkupplung verbunden ist, wodurch im Betrieb ein Drehen des ersten Schraubkörpers (60) nur im Sinne einer Verkleinerung des Bremslüftspiels zugelassen wird.

2. Betätigungsvorrichtung nach Anspruch 1,
dadurch **gekennzeichnet,** daß die Rückstellwelle (90) und das Ritzel (112) Formteile (131, 132) aufweisen, die in formschlüssigen gegenseitigen Eingriff bringbar sind.

3. Betätigungsvorrichtung nach Anspruch 1 oder 2,
dadurch **gekennzeichnet,** daß die Rückstellwelle (90) federnd nachgiebig außer Eingriff mit dem Ritzel (112) vorgespannt ist.

4. Betätigungsvorrichtung nach einem der Ansprüche 1 bis 3,
dadurch **gekennzeichnet,** daß die Freilauf-Rutschkupplung einen ersten und einen zweiten Kupplungsabschnitt (120, 122) aufweist, von denen der zweite Kupplungsabschnitt (120) am Ritzel (112) ausgebildet und mit dem ersten Kupplungsabschnitt (122) durch eine erste Feder (118) verbunden ist, die beim Drehen des ersten Kupplungsabschnitts entgegen der Nachstellrichtung durchrutscht.

5. Betätigungsvorrichtung nach Anspruch 4,
dadurch **gekennzeichnet,** daß am Ritzel (112) zur Bildung einer weiteren Freilauf-Rutschkupplung ein dritter Kupplungsabschnitt (123) ausgebildet ist, der dem zweiten Kupplungsabschnitt gegenüberliegt und durch eine zweite Feder (124) mit einem vierten Kupplungsabschnitt (125) verbunden ist, wobei der vierte Kupplungsabschnitt (125) durch die federnde Vorspannung des Ritzels (112) in reibschlüssigem Kontakt mit dem Gehäuse (32) gegen Verdrehen gehalten ist und die zweite Feder (124) beim Drehen des dritten Kupplungsabschnitts (123) in Nachstellrichtung durchrutscht.

6. Betätigungsvorrichtung nach Anspruch 5,
dadurch **gekennzeichnet,** daß der reibschlüssige Kontakt mit dem Gehäuse (32) über eine den vierten Kupplungsabschnitt (125) einschließende Kegelkupplung (116) mit Konus (126) und einen Gegenkonus (128) im Gehäuse (32) stattfindet, wobei durch Lösen der Kegelkupplung (116) eine Drehbewegung des Ritzels (112) entgegen der Nachstellrichtung erleichtert ist.

7. Betätigungsvorrichtung nach Anspruch 6,
dadurch **gekennzeichnet,** daß das dem Gehäuse (32) zugewandte Ende (140) der Rückstellwelle (90) sich konisch verjüngt und beim Ineingriffbringen der Formteile (131, 132) des Ritzels (112) und der Rückstellwelle (90) zwischen der Kegelkupplung (116) und dem Gehäuse (32) angeordnete Kugeln (142) in radialer Richtung auseinanderdrängt, so daß der Konus (126) vom Gegenkonus (128) abgehoben wird.

## Claims

1. An actuator with automatic adjustment for brakes, especially in trucks and buses, comprising
- a housing (32) which has a housing axis (A) and encloses at least one first cam surface (54) disposed around said axis,
- a rotary member (38) which is rotatable about the housing axis (A), includes an axial extension (76) to receive an actuating member (80), and comprises at least one second cam surface (40) by which it bears against the first cam surface (54) to cause axial displacement in response to its rotation,
- a first screw member (60) which is rotatable about the housing axis (A),
- a second screw member (70) which, being fixed against rotation, is designed to apply actuating force on a brake pad (24) and is connected to the first screw member (60) by paired adjustment threads (72),
- a coupling arrangement (98) for transmitting limited torque from the rotary member (38) to the first screw member (60) for axial readjustment of the brake pad (24),
- a return shaft (90) supported laterally spaced from the housing axis (A), and
- a pinion (112) coupled to the first screw member (60), the return shaft (90) acting through the pinion (112) to permit the two screw members (60, 70) to be threaded back with respect to each other for an exchange of the brake pad (24),
**characterized** in that
- the rotary member (38) is provided with teeth (86) around its circumference,
- the coupling arrangement (98) is disposed around the return shaft (90) and meshes with the teeth (86) of the rotary member (38) by teeth (89) so that the limited torque is transmitted from the rotary member (38) through the coupling arrangement (98) and the pinion (112) to the first screw member (60),
- the pinion (112) is biased resiliently in axial direction to obtain frictional engagement and is connected to the coupling arrangement (98) by a freewheel slip coupling so that, during operation, rotation of the first screw member (60) is allowed only in the sense of reducing the clearance to ease the brake.

2. The actuator as claimed in claim 1, characterized in that the return shaft (90) and the pinion (112) comprise shaped parts (131, 132) adapted to be mutually engaged in form lock.

3. The actuator as claimed in claim 1 or 2, characterized in that the return shaft (90) is resiliently biased out of engagement with the pinion (112).

4. The actuator as claimed in any one of claims 1 to 3, characterized in that the freewheel slip coupling comprises first and second coupling portions (120, 122) of which the second coupling portion (120) is formed at the pinion (112) and connected to the first coupling portion (122) by a first spring (118) which gives way when the first coupling portion is rotated contrary to the direction of adjustment.

5. The actuator as claimed in claim 4, characterized in that the pinion (112) is formed with a third coupling portion (123), to present another freewheel slip coupling, which coupling portion is located opposite the second coupling portion and is connected to a fourth coupling portion (125) by a second spring (124), the fourth coupling portion (125) being held against rotation in frictional engagement with the housing (32) by the resilient bias of the pinion (112) and the second spring (124) giving way upon rotation of the third coupling portion (123) in the direction of adjustment.

6. The actuator as claimed in claim 5, characterized in that the frictional engagement with the housing (32) is established by a cone coupling (116) which comprises the fourth coupling portion (125) and includes a cone (126) and by a countercone (128) in the housing (32), disengagement of the cone coupling (116) facilitating the rotational movement of the pinion (112) contrary to the direction of adjustment.

7. The actuator as claimed in claim 6, characterized in that the end (140) of the return shaft (90) facing the housing (32) tapers conically, urging apart in radial direction balls (142) which are disposed between the cone coupling (116) and the housing (32) when the shaped parts (131, 132) of the pinion (112) and the return shaft (90) are engaged with each other, whereby the cone (126) is lifted off the countercone (128).

## Revendications

1. Dispositif d'actionnement à réajustage automatique pour freins, en particulier pour freins de camions et d'autobus, comportant:
- un carter (32), qui présente un axe de carter (A) et qui comprend au moins une première surface de came (54) qui entoure ce dernier,
- un corps tournant (38), pouvant tourner autour de l'axe de carter (A), et présentant un prolongement axial (76) pour l'accouplement d'un organe d'actionnement (80), et au moins une deuxième surface de came (40), par laquelle il s'appuie sur la première surface de came (54) pour provoquer un coulissement axial en fonction de sa rotation,
- un premier corps fileté (60), qui peut tourner autour de l'axe de carter (A),
un deuxième corps fileté (70), fixé sans rotation possible, réalisé pour exercer une force d'actionnement sur une mâchoire de frein (24), et relié au premier corps fileté (60) par une liaison à vissage, servant au réajustage (72),
- un dispositif d'embrayage (98), qui transmet un couple limité de rotation du corps tournant (38) au premier corps fileté (60) pour le réajustage axial de la mâchoire de frein (24),
- un arbre de réajustage (90), qui est monté à une certaine distance latérale de l'axe de carter (A), et
- un pignon arbré (112), qui est couplé au premier corps fileté (60), l'arbre de réajustage (90) permettant, par l'intermédiaire de ce pignon arbré (112), de dévisser les deux corps fileté (60, 70) l'un par rapport à l'autre, pour changer la mâchoire de frein (24),
caractérisé en ce que
- le corps tournant (38) présente, sur sa périphérie, une denture (86),
- le dispositif d'embrayage (98) est disposé autour de l'arbre de réajustage (90), et engrène, par une denture (89), avec la denture (86) du corps tournant (38), de telle façon que le couple limité de rotation du corps tournant (38) est transmis, par le dispositif d'embrayage (98) et le pignon arbré (112), au premier corps fileté (60),
- le pignon arbré (112) est soumis, dans le sens axial, à une précontrainte élastique pour réaliser un blocage par frottement et est relié au dispositif d'embrayage (98) par un embrayage à friction formant roue libre, si bien qu'en fonctionnement, une rotation du premier corps fileté (60) n'est permise que pour réaliser une réduction du jeu de freinage.

2. Dispositif d'actionnement suivant la revendication 1, caractérisé en ce que l'arbre de réajustage (90) et le pignon arbré (112) présentent des pièces de forme (131, 132), qui peuvent être engagées l'une par rapport à l'autre par conjugaison de forme.

3. Dispositif d'actionnement suivant la revendication 2, caractérisé en ce que l'arbre de réajustage (90) est soumis à une précontrainte élastique tendant à relâcher son engagement avec le pignon arbré (112).

4. Dispositif d'actionnement suivant l'une des revendications 1 à 3, caractérisé en ce que l'accouplement à friction formant roue libre présente un premier élément d'accouplement et un deuxième élément d'accouplement (122, 120), le deuxième élément d'accouplement (120) étant formé sur le pignon arbré (112) et étant relié au premier élément d'accouplement (122) par un premier ressort (118), qui coulisse, lors de la rotation du premier élément d'accouplement, dans le sens opposé au sens de réajustage.

5. Dispositif d'actionnement suivant l'une des revendications 1 à 4, caractérisé en ce que, sur le pignon arbré (112), pour réaliser un autre accouplement à friction formant roue libre, un troisième élément d'accouplement (123) est réalisé, qui est placé à l'opposé du deuxième élément d'accouplement et qui est relié, par un deuxième ressort (124), à un quatrième élément d' accouplement (125), étant entendu que le quatrième élément d'accouplement (125) est maintenu, sans rotation possible, en contact de blocage par frottement avec le carter (32), par la précontrainte élastique du pignon arbré (112), et étant entendu que le deuxième ressort (124) coulisse dans la direction du réajustage quand le troisième élément d'accouplement (123) tourne.

6. Dispositif d'actionnement suivant la revendication 5, caractérisé en ce que le contact à blocage par frottement avec la carter (32) est réalisé par l'intermédiaire d'un accouplement conique (116), incluant le quatrième élément d' accouplement (125), comportant un cône (126) et un contre-cône (128) dans le carter (32), étant entendu qu'en libérant l'accouplement conique (116), un mouvement de rotation du pignon arbré (112), dans le sens opposé au réajustage, est facilité.

7. Dispositif d'actionnement suivant la revendication 6, caractérisé en ce que l'extrémité (140) de l'arbre de réajustage (90), tournée vers le carter (32), s'amincit en formant un cône et, par la mise en engagement des pièces de forme (131, 132) du pignon arbré (112) et de l'arbre de réajustage (90), des billes (142), disposées entre l'accouplement à billes (116) et le carter (32), sont écartées les unes des autres dans la direction radiale, de telle façon que le cône (126) est soulevé du contre-cône (128).
